# EUROPÄISCHE PATENTSCHRIFT

(11) **EP 1 563 321 B1**
(45) Veröffentlichungstag und Bekanntmachung des Hinweises auf die Patenterteilung: **10.06.2009**
(21) Anmeldenummer: 03808669.0
(22) Anmeldetag: 11.08.2003
(51) Int. Cl.: G01S 17/93

(54) **OPTISCHER SENSOR**
OPTICAL SENSOR
CAPTEUR OPTIQUE

(30) Priorität: 15.10.2002 DE 10247925
(43) Veröffentlichungstag der Anmeldung: 17.08.2005
(73) Patentinhaber: ROBERT BOSCH GMBH, 70442 Stuttgart (DE)
(72) Erfinder: KLOTZ, Albrecht, 72076 Tuebingen (DE); SCHMID, Dirk, 75397 Simmozheim (DE); SCHICK, Jens, 71083 Herrenberg (DE)
(86) Internationale Anmeldenummer: PCT/DE2003/002706
(87) Internationale Veröffentlichungsnummer: WO 2004/036248

(56) Entgegenhaltungen:
- EP-A- 1 209 486
- WO-A-95/01577
- US-A- 5 086 342

## Beschreibung

### Stand der Technik

Die Erfindung betrifft einen Sensor, bei dem Lichtstrahlen in verschiedene Richtungen ausgesandt, an gegebenenfalls vorhandenen Objekten reflektiert, wieder empfangen und nach Richtung und Laufzeit im Sinne einer dreidimensionalen Abbildung der Objekte ausgewertet werden.

Sensoren nach der Gattung des Hauptanspruchs sind unter der Bezeichnung Lidar-Sensoren (= Light Detection and Ranging) bekannt und auf dem Markt verfügbar. Dabei wird zwischen zwei verschiedenen Bauweisen unterschieden, nämlich Sensoren mit fester Messstrahlanordnung in einer beispielsweise horizontalen Ebene und solchen mit einer mechanischen Strahlschwenkung, beispielsweise durch Spiegel. Die Mechanik erlaubt zwar eine feinere Winkelauflösung, als dies bei einer festen zeilenförmigen Messstrahlanordnung möglich ist, weist jedoch die bekannten Nachteile einer mechanischen Lösung, nämlich Empfindlichkeit gegen mechanische Beanspruchung, Abnutzung und relativ aufwändige Herstellung auf.

Die bekannten Lidar-Sensoren können für Assistenzsysteme für Kraftfahrzeuge auf der Basis von Umfeldsensoren, zur Objekt-Detektion und zur Messung von Abständen und Relativgeschwindigkeiten verwendet werden. Zur Zeit steht die Funktion ACC (= adaptive cruise control, auch unter Marken wie Abstandsregeltempomat und Distronic bekannt geworden) im Vordergrund, wobei ein Messbereich von circa 3m bis 120m bei schmalem Öffnungswinkel erforderlich ist. Im automobilen Bereich können eine Reihe von Funktionen im Nahbereich bis zu 30m Entfernung wie "Low Speed Following", "Blind Spot Detection", "Backing Aid" oder "PreCrash" mit Lidar-Sensoren realisiert werden, wenn ein breiter Erfassungsbereich sowohl horizontal als auch vertikal mit einer genügend hohen Winkelauflösung in beiden Richtungen vorhanden ist.

Die EP-A 1 209 486 zeigt einen optischen Abstandssensor, welcher eine Anzahl von Lichtquellen aufweist, die in einer zweidimensionalen Matrix angeordnet sind. Die einzelnen Lichtquellen sind unabhängig voneinander ansteuerbar.

Aufgabe der vorliegenden Erfindung ist es, hierfür einen Sensor anzugeben, der insbesondere den Anforderungen im Automobilbau bezüglich der Fertigbarkeit, der Zuverlässigkeit, der Robustheit und der Lebensdauer genügt.

### Vorteile der Erfindung

Bei dem erfindungsgemäßen Sensor gemäß Anspruch 1 wird diese Aufgabe dadurch gelöst, dass zur Erzeugung der Lichtstrahlen Lichtquellen in Form einer zweidimensionalen Matrix angeordnet sind.

Der erfindungsgemäße Sensor weist eine gesteigerte Lebensdauer auch unter rauhen Umweltbedingungen, beispielsweise Vibration, durch das Fehlen mechanisch bewegter Teile auf. Außerdem ist durch planaren Aufbau der Lichtquellen und gegebenenfalls von optischen Einrichtungen auf einer Leiterplatte der Fertigungsaufwand gering.

Bei bestimmten Anwendungen kann es vorteilhaft sein, wenn die Lichtquellen unterschiedliche Abstände voneinander aufweisen.

Bezüglich einer leichten Herstellbarkeit des erfindungsgemäßen Sensors mit Hilfe von erhältlichen Bauteilen kann gemäß einer Weiterbildung vorgesehen sein, dass die Lichtquellen auf zeilenförmigen Baugruppen angeordnet sind. Es sind jedoch durchaus Fertigungsmethoden bekannt, die erlauben, dass die Lichtquellen als einzelne Bauelemente auf einer Leiterplatte montiert sind, beispielsweise in Chip-on-Board-Technik.

Eine andere Weiterbildung der Erfindung besteht darin, dass die einzelnen Lichtquellen innerhalb jeweils einer Spalte zick-zack-artig versetzt sind.

Neben den vorgenannten Vorteilen weist eine Ausgestaltung des erfindungsgemäßen Sensors den Vorteil einer hohen Flexibilität dadurch auf, dass die Lichtquellen unabhängig voneinander ansteuerbar sind.

So wird der Erfassungsbereich im Betrieb der Fahrsituation bzw. der Objekt-Szene angepasst, so dass beispielsweise schnell bewegte Objekte gezielt verfolgt werden können. Diese Fähigkeit ist insbesondere für sicherheitsrelevante Funktionen, wie PreCrash, wichtig.

Zur elektronischen Ansteuerung der einzelnen Lichtquellen stehen geeignete zu programmierende Prozessoren und weitere elektronische Schaltungen zur Verfügung. So kann beispielsweise die Art der Ansteuerung der Lichtquellen im laufenden Betrieb sehr schnell geändert werden, beispielsweise kann in mehrere Mess-Modi mit verschiedenen Winkelerfassungsbereichen und Messzykluszeiten je nach Anforderung umgeschaltet werden. So kann ein vollständiges Abtasten des gesamten Bereichs durch zeilenweises Scannen der Messstrahlen bei relativ langen Zykluszeiten erfolgen. Alternativ ist eine Zeilen- oder Spaltenabtastung in bestimmter Höhe und Breite möglich. Schließlich können einzelne Messstrahlen zur genauen und schnellen Verfolgung einzelner Objekte erzeugt werden. Dadurch kann die gleichzeitige Bedienung verschiedener Funktionen, wie beispielsweise Low-Speed-Following und PreCrash, durch koordinierte Umschaltung zwischen den verschiedenen Mess-Modi eines einzelnen Sensors erfolgen.

Für die Modus-Umschaltung bzw. Aufmerksamkeitssteuerung kann der erfindungsgemäße Sensor unter anderem wie folgt gesteuert werden:
- Zyklisch wiederholter horizontaler Linienscan auf mittlerer Ebene von horizontal -30° bis +30°.
- In größeren zeitlichen Intervallen werden auch die höheren und tieferen Ebenen gescannt, um die vertikalen Objektlagen zu bestimmen, ebenso die Lage des Fahrzeugs relativ zur Fahrbahnoberfläche.
- Nach Bedarf (Einfluß von Nickwinkel oder Fahrbahnkrümmung) wird für die nächsten Linienscan-Zyklen auf eine tiefere oder höhere Ebene umgeschaltet.

Bei dem erfindungsgemäßen Sensor können die Lichtquellen von Leuchtdioden (lichtemittierenden Dioden) oder Laserdioden gebildet sein.

Gemäß einer vorteilhaften Ausgestaltung kann vorgesehen sein, dass vor jeder der Lichtquellen eine Sammellinse angeordnet ist. Grundsätzlich ist es möglich, diese Sammellinse zur Bildung der Lichtstrahlen auszubilden. Häufig wird man jedoch vorziehen, die Sammellinse dazu zu verwenden, um möglichst viel von der jeweiligen Lichtquelle ausgesandtes Licht auf eine gemeinsame Sammellinse zu konzentrieren, die auch als Kombination mehrerer Linsen ausgeführt sein kann.

Je nach Anwendung im Einzelnen kann die Querschnittsform des Lichtstrahls von Bedeutung sein. Dazu können bei einer Weiterbildung der Erfindung zur Strahlformung der Lichtstrahlen der einzelnen Lichtquellen Lichtwellenleiter vorgesehen sein.

Werden beispielsweise in zwei zueinander senkrechten Richtungen verschiedene Winkelauflösungen benötigt, kann es vorteilhaft sein, wenn die von den einzelnen Lichtquellen ausgesandten Lichtstrahlen elliptische Querschnitte aufweisen.

Die Erfindung umfasst ferner, dass zum Empfang der von den Objekten reflektierten Strahlen ein optischer Empfänger mit einer Sammellinse und einer lichtempfindlichen Fläche vorgesehen ist. Dabei kann die lichtempfindliche Fläche von einem optoelektrischen Wandler gebildet sein, beispielsweise von einer entsprechend großflächigen PIN-Diode.

Eine andere Möglichkeit zu einer vorteilhaften Realisierung eines Empfängers besteht darin, dass die lichtempfindliche Fläche von matrixförmig angeordneten optoelektrischen Wandlern gebildet ist. Der Vorteil dieser Anordnung liegt zum einen in der höheren Schaltgeschwindigkeit der kleinen Dioden, was eine höhere Messgenauigkeit und eine radiale Trennfähigkeit bewirkt, und zum anderen in der größeren Winkeltrennschärfe, was sich in der Vermeidung von Übersprechen zwischen den Messstrahlen bemerkbar macht. Es können für die beiden Ausführungsformen der lichtempfindlichen Fläche auch Zwischenlösungen angewandt werden, wie beispielsweise ein Array aus spaltenförmigen PIN-Dioden.

### Zeichnung

Ausführungsbeispiele der Erfindung sind in der Zeichnung anhand mehrerer Figuren dargestellt und in der nachfolgenden Beschreibung näher erläutert. Es zeigt:
- Fig. 1: eine schematische Darstellung der Anordnung von Lichtquellen in einer Matrix,
- Fig. 2: eine schematische Darstellung eines mit zwei erfindungsgemäßen Sensoren versehenen Kraftfahrzeugs,
- Fig. 3: eine schematische Darstellung eines Querschnitts durch einen Sensor mit jeweils einem Strahlensensor und einem Empfänger und
- Fig. 4: eine andere Ausführungsform eines Empfängers.

### Beschreibung des Ausführungsbeispiels

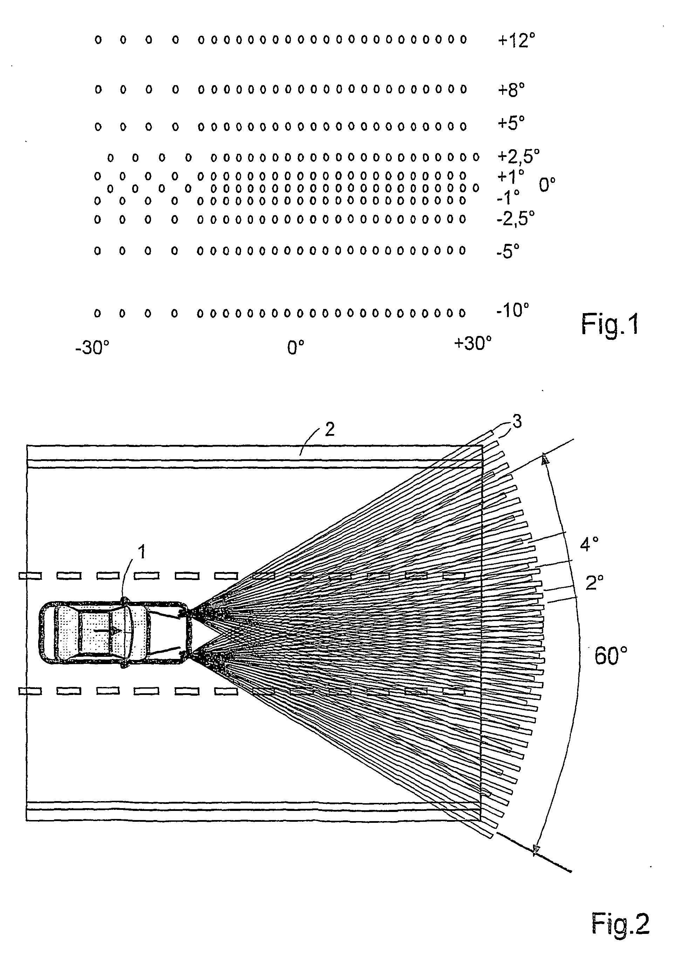

Fig. 1 zeigt zehn Zeilen von Lichtquellen 1 mit jeweils elliptischem Querschnitt. Der mit einem vorgegebenen Objektiv erreichbare vertikale Erfassungswinkel erstreckt sich bei diesem Beispiel zwischen -10° und +12°. Der Abstand der Zeilen voneinander wird mit größerwerdendem vertikalen Erfassungswinkel von 0° ausgehend größer. Damit wird dem Umstand Rechnung getragen, dass im Allgemeinen in der horizontalen Ebene auf Höhe der Sensoreinbauposition eine genauere Winkelauflösung erforderlich ist.

Bei dem Beispiel sind ferner in einem linken Teil der Matrix die Abstände zwischen den Lichtquellen größer gewählt, so dass hier die Winkelauflösung kleiner ist. Dabei sind in diesem Bereich die Lichtquellen mit niedrigem vertikalen Erfassungswinkel gegeneinander versetzt, so dass beispielsweise vertikale Kanten von Objekten trotz des größeren Abstandes mit relativ guter Auflösung erkannt werden können.

Fig. 2 zeigt ein Kraftfahrzeug 1 auf einer Straße 2 mit einem angedeuteten Erfassungsraum, der von zwei im Einzelnen nicht dargestellten Sensoren gebildet wird, die Lichtstrahlen 3 aussenden und Reflektionen von Objekten empfangen. Dabei wurde, wie in Fig. 1 dargestellt, bei dem auf der rechten Fahrzeugseite befindlichen Sensor die Winkelauflösung an der linken Seite auf 4° verringert gegenüber 2° während des übrigen horizontalen Erfassungsbereichs und umgekehrt. Diese Maßnahme spart Leuchtdioden, macht sich jedoch auch dadurch vorteilhaft bemerkbar, dass insgesamt eine geringere Zykluszeit bei Beibehaltung der Auflösung in dem wichtigeren Bereich möglich ist.

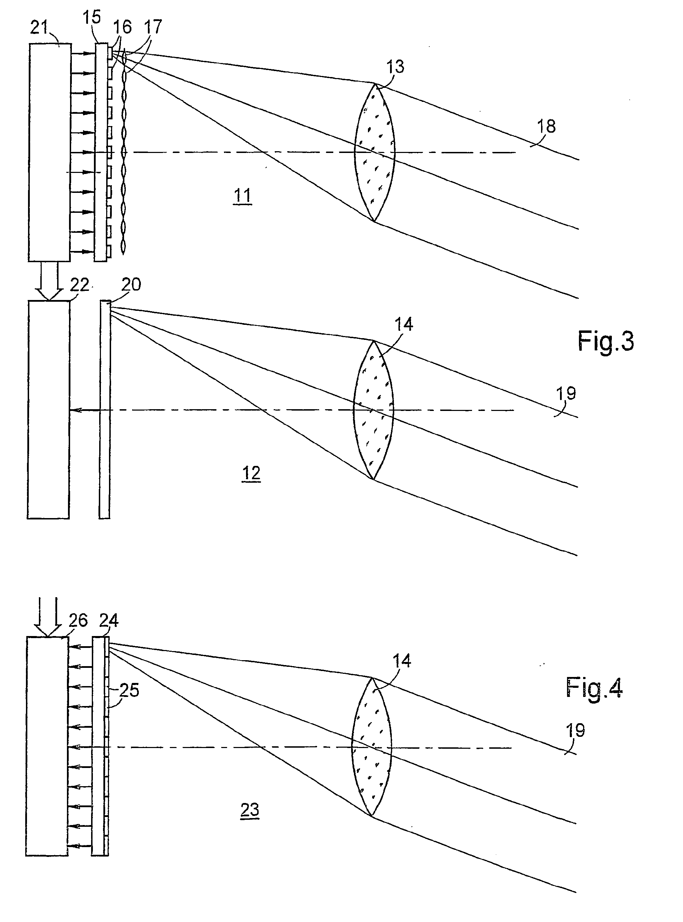

Fig. 3 zeigt einen erfindungsgemäßen Sensor mit einem Sender 11 und einem Empfänger 12, die jeweils eine Linse 13, 14 aufweisen. Auf einer Leiterplatte 15 des Empfängers sind beispielsweise mit der in Fig. 1 dargestellten Verteilung Leuchtdioden 16 angeordnet, die jeweils mit einer Linse 17 versehen sind, welche bewirken, dass ein größtmöglicher Teil des von der Leuchtdiode erzeugten Lichts auf die Linse 13 fällt und somit für den Lichtstrahl genutzt wird. Die Leuchtdioden 16 sind in der Brennebene der Linse 13 angeordnet, so dass das jeweils von einer Leuchtdiode 16 erzeugte Licht ein paralleles Strahlenbündel 18 ergibt. Das von einem nicht dargestellten Objekt reflektierte Strahlenbündel 19 wird bei dem Empfänger 12 des Ausführungsbeispiels nach Fig. 3 auf einen Punkt der großflächigen PIN-Diode 20 konzentriert.

Eine geeignete elektronische Steuerschaltung 21 dient zur gepulsten sequentiellen Ansteuerung der Leuchtdioden 16, wobei je nach Anwendungsfall verschiedene Modi möglich sind. Die Information, welche Leuchtdioden 16 zu welcher Zeit Licht aussenden, wird einer Auswerteschaltung 22 des Empfängers übergeben, so dass die von der PIN-Diode 20 erzeugten Impulse den von den Leuchtdioden 16 ausgesandten Lichtimpulsen zugeordnet werden können, wobei dann die Laufzeit ermittelt wird. Damit wiederum kann zusammen mit der Richtungsinformation der Lichtstrahlen ein dreidimensionales Abbild der detektierten Szene erstellt werden.

Fig. 4 zeigt eine Alternative 23 für den Empfänger 12 (Fig. 3) mit einer Leiterplatte 24, auf welcher eine dem Sender entsprechende Anzahl von PIN-Dioden 25 angeordnet ist, was wie eingangs beschrieben, unter anderem eine Erhöhung der Sicherheit gegen Übersprechen zwischen den einzelnen Lichtstrahlen ermöglicht. Die Auswerteschaltung 26 des Empfängers 23 weist entsprechend viele Eingänge auf.

## Patentansprüche

1. Sensor für ein Kraftfahrzeug, mit Lichtquellen (16) zur Erzeugung von Lichtstrahlen, die in Form einer zweidimensionalen Matrix angeordnet sind und die Lichtstrahlen in verschiedene Richtungen aussenden, die Lichtstrahlen an vorhandenen Objekten reflektiert werden und die reflektierten Lichtstrahlen wieder empfanden werden, mit einem Empfänger (12) und mit einer elektronischen Steuerschaltung (21), die die Lichtquellen ansteuert, und einer Auswerteschaltung (22), mit der die empfangenen Lichtstrahlen nach Richtung und Laufzeit im Sinne einer dreidimensionalen Abbildung der Objekte ausgewertet werden, wobei die Lichtquellen (16) von der elektronischen Steuerschaltung (21) unabhängig voneinander angesteuert werden, **dadurch gekennzeichnet, dass** die Lichtquellen so angesteuert werden, dass der Erfassungsbereich des Sensors der Fahrsituation des Kraftfahrzeugs bzw. der Objektszene angepasst wird.

2. Sensor nach Anspruch 1, **dadurch gekennzeichnet, dass** die Abstände zwischen den Lichtquellen (16) in der Matrix unterschiedlich sind.

3. Sensor nach einem der Ansprüche 1 oder 2, **dadurch gekennzeichnet, dass** die Lichtquellen (16) als einzelne Bauelemente auf einer Leiterplatte (15) montiert sind.

4. Sensor nach einem der vorhergehenden Ansprüche, **dadurch gekennzeichnet, dass** die einzelnen Lichtquellen (16) zick-zack-artig versetzt sind.

5. Sensor nach einem der vorhergehenden Ansprüche, **dadurch gekennzeichnet, dass** die Lichtquellen von Leuchtdioden (16) gebildet sind.

6. Sensor nach einem der Ansprüche 1 bis 5, **dadurch gekennzeichnet, dass** die Lichtquellen von Laserdioden gebildet sind.

7. Sensor nach einem der vorhergehenden Ansprüche, **dadurch gekennzeichnet, dass** vor jeder der Lichtquellen (16) eine Sammellinse (17) angeordnet ist.

8. Sensor nach einem der vorhergehenden Ansprüche, **dadurch gekennzeichnet, dass** zur Strahlformung der Lichtstrahlen der einzelnen Lichtquellen Lichtwellenleiter vorgesehen sind.

9. Sensor nach einem der vorhergehenden Ansprüche, **dadurch gekennzeichnet, dass** die von den einzelnen Lichtquellen (16) ausgesandten Lichtstrahlen elliptische Querschnitte aufweisen.

10. Sensor nach einem der vorhergehenden Ansprüche, **dadurch gekennzeichnet, dass** zum Empfang der von den Objekten reflektierten Strahlen ein optischer Empfänger (12, 23) mit einer Sammellinse (14) und einer lichtempfindlichen Fläche (20, 25) vorgesehen ist.

11. Sensor nach Anspruch 10, **dadurch gekennzeichnet, dass** die lichtempfindliche Fläche von einem optoelektrischen Wandler (20) gebildet ist.

12. Sensor nach Anspruch 10, **dadurch gekennzeichnet, dass** die lichtempfindliche Fläche von matrixförmig angeordneten optoelektrischen Wandlern (25) gebildet ist.

## Claims

1. Sensor for a motor vehicle, having light sources (16) for generating light beams which are arranged in the form of a two-dimensional array and which emit light beams in various directions, the light beams being reflected at objects present and the reflected light beams being received again, having a receiver (12), having an electronic control circuit (21) which controls the light sources, and having an evaluation circuit (22) with which the light beams received are evaluated in terms of direction and propagation time for the purpose of a three-dimensional mapping of the objects, with the light sources (16) being controlled independently of one another by the electronic control circuit (21), **characterized in that** the light sources are controlled such that the coverage of the sensor is adapted to the driving situation of the motor vehicle and/or the object scene.

2. Sensor according to Claim 1, **characterized in that** the distances between the light sources (16) in the array are different.

3. Sensor according to either of Claims 1 and 2, **characterized in that** the light sources (16) are mounted as individual components on a printed circuit board (15).

4. Sensor according to one of the preceding claims, **characterized in that** the individual light sources (16) are offset in a zigzag manner.

5. Sensor according to one of the preceding claims, **characterized in that** the light sources are formed by light-emitting diodes (16).

6. Sensor according to one of Claims 1 to 5, **characterized in that** the light sources are formed by laser diodes.

7. Sensor according to one of the preceding claims, **characterized in that** a converging lens (17) is arranged in front of each light source (16).

8. Sensor according to one of the preceding claims, **characterized in that** optical waveguides are provided for the beam forming of the light beams of the individual light sources.

9. Sensor according to one of the preceding claims, **characterized in that** the light beams emitted by the individual light sources (16) have elliptical cross sections.

10. Sensor according to one of the preceding claims, **characterized in that** an optical receiver (12, 23) with a converging lens (14) and a photosensitive surface (20, 25) is provided for receiving the beams reflected by the objects.

11. Sensor according to Claim 10, **characterized in that** the photosensitive surface is formed by an opto-electrical transducer (20).

12. Sensor according to Claim 10, **characterized in that** the photosensitive surface is formed by opto-electrical transducers (25) arranged in form of an array.

## Revendications

1. Capteur pour véhicule automobile, comprenant des sources de lumière (16) destinées à générer des rayons lumineux qui sont disposées sous la forme d'une matrice bidimensionnelle et émettent les rayons lumineux dans différentes directions, les rayons lumineux étant réfléchis sur des objets présents et les rayons lumineux réfléchis étant de nouveau captés, comprenant un récepteur (12) et un circuit de commande électronique (21) qui commande les sources de lumière, et comprenant un circuit d'interprétation (22) qui interprète la direction et le temps de propagation des rayons lumineux reçus dans le sens d'une représentation tridimensionnelle des objets, les sources de lumière (16) étant commandées indépendamment les unes des autres par le circuit de commande électronique (21), **caractérisé en ce que** les sources de lumière sont commandées de telle sorte que la zone de détection du capteur est adaptée à la situation de conduite du véhicule automobile ou à la scène des objets.

2. Capteur selon la revendication 1, **caractérisé en ce que** les écarts entre les sources de lumière (16) dans la matrice sont différents.

3. Capteur selon l'une des revendications 1 et 2, **caractérisé en ce que** les sources de lumière (16) sont montées sous la forme de composants individuels sur un circuit imprimé (15).

4. Capteur selon l'une des revendications précédentes, **caractérisé en ce que** les sources de lumière individuelles (16) sont décalées en zigzag.

5. Capteur selon l'une des revendications précédentes, **caractérisé en ce que** les sources de lumière sont formées par des diodes électroluminescentes (16).

6. Capteur selon l'une des revendications précédentes, **caractérisé en ce que** les sources de lumière sont formées par des diodes laser.

7. Capteur selon l'une des revendications précédentes, **caractérisé en ce qu'**une lentille collectrice (17) est disposée devant chaque source de lumière (16).

8. Capteur selon l'une des revendications précédentes, **caractérisé en ce que** des fibres optiques sont prévues pour mettre en forme les rayons lumineux des sources de lumière individuelles.

9. Capteur selon l'une des revendications précédentes, **caractérisé en ce que** les rayons lumineux émis par les sources de lumière (16) individuelles présentent des sections transversales elliptiques.

10. Capteur selon l'une des revendications précédentes, **caractérisé en ce qu'**un récepteur optique (12, 23) muni d'une lentille collectrice (14) et d'une surface photosensible (20, 25) est prévu pour capter les rayons réfléchis par les objets.

11. Capteur selon la revendication 10, **caractérisé en ce que** la surface photosensible est formée par un convertisseur optoélectronique (20).

12. Capteur selon la revendication 10, **caractérisé en ce que** la surface photosensible est formée par des convertisseurs optoélectroniques (25) disposés sous la forme d'une matrice.
